# EUROPEAN PATENT SPECIFICATION

(11) **EP 2 048 813 B1**
(45) Date of publication and mention of the grant of the patent: **09.06.2010**
(21) Application number: 07721764.4
(22) Date of filing: 21.06.2007
(51) Int. Cl.: H04L 9/32

(54) **A METHOD AND DEVICE FOR REALIZING UNICAST REVERSE PATH CHECK**
VERFAHREN UND EINRICHTUNG ZUR REALISIERUNG EINER UNICAST-RÜCKWÄRTSFAHRTPRÜFUNG
PROCÉDÉ ET DISPOSITIF POUR RÉALISER UNE VÉRIFICATION DE TRAJET INVERSE D'ENVOI INDIVIDUEL

(30) Priority: 02.08.2006 CN 200610103836
(43) Date of publication of application: 15.04.2009
(73) Proprietor: Huawei Technologies Co., Ltd., Longgang District, Shenzhen Guangdong 518129 (CN)
(72) Inventor: TANG, Shi, Shenzhen, Guangdong 518129 (CN)
(74) Representative: Gulde, Klaus W.
(86) International application number: PCT/CN2007/070145
(87) International publication number: WO 2008/017255

(56) References cited:
- CN-A- 1 750 512
- US-A1- 2003 223 402
- US-A1- 2005 177 717
- US-A1- 2005 265 328
- DAI GUANGMING Z YE HUAWEI TECHNOLOGIES: "Specific Route uRPF (SRU); draft-dai-specific-route-urpf-00.txt" IETF STANDARD-WORKING-DRAFT, INTERNET ENGINEERING TASK FORCE, IETF, CH, 13 September 2006 (2006-09-13), XP015046505 ISSN: 0000-0004
- BAKER CISCO SYSTEMS P SAVOLA CSC/FUNET F: "Ingress Filtering for Multihomed Networks; rfc3704.txt" IETF STANDARD, INTERNET ENGINEERING TASK FORCE, IETF, CH, 1 March 2004 (2004-03-01), XP015009484 ISSN: 0000-0003
- FERGUSON CISCO SYSTEMS P ET AL: "Network Ingress Filtering: Defeating Denial of Service Attacks which employ IP Source Address Spoofing; rfc2827.txt" IETF STANDARD, INTERNET ENGINEERING TASK FORCE, IETF, CH, 1 May 2000 (2000-05-01), XP015008610 ISSN: 0000-0003

## Description

### Field of the Technology

The present invention relates to a communication technology, and more particularly to a method and device for realizing unicast reverse path forwarding.

### Background of the Invention

IP source address spoofing is a common attack in IP network, that is, the attacker attacks the IP network by altering the source IP address.

In order to prevent the malicious attack on the IP network of the attacker by using the method of altering the source IP address structure, the commonly adopted defending measurement is unicast reverse path forwarding (URPF), disclosed by RFC 3704.

Recently, two methods for realizing URPF are used.

In the first method, URPF is enabled at relevant interface. That is, URPF is enabled at a forward interface on the network device, so that URPF is implemented while the message passing the forward interface.

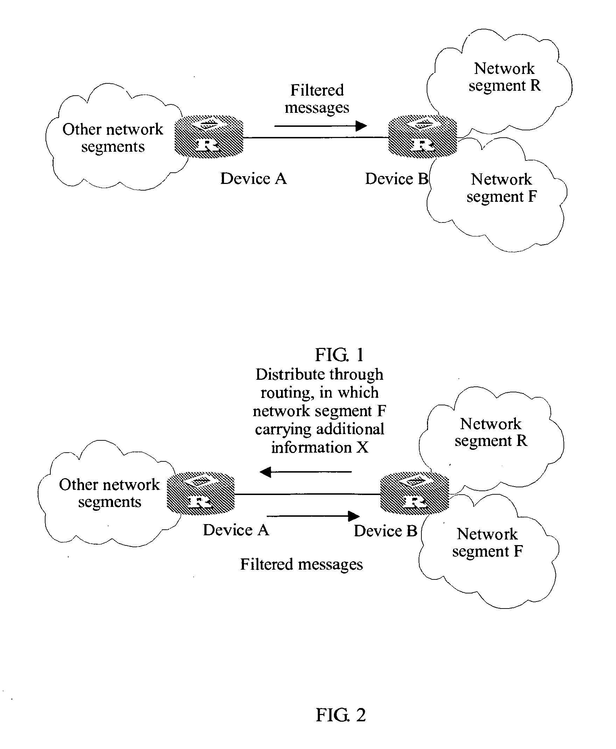

Hereinafter, the process of realizing URPF by the first method is illustrated with reference to FIG. 1.

In FIG. 1, a device A and a device B are connected to other network segments, the device B is connected to two network segments, the network segment F needs to enable URPF, and the network segment R needs not to enable URPF. In order to implement URPF on the messages transmitted to the network segment F, URPF needs to be enabled at the interface of the device A connected to other network segments, so that URPF is implemented on all the messages transmitted from the network device A to the network device B. That is to say, URPF should be implemented on the messages transmitted to the network segment R from the device A. Therefore, the forwarding performance of the network device is reduced.

In the second method, URPF is realized by means of traffic classification.

Hereinafter, the process of realizing URPF by the second method is also illustrated with reference to FIG. 1.

In FIG. 1, if the network segment F needs to enable URPF, and the network segment R needs not to enable URPF, the device A needs to detect all the connections of the device B when transmitting a message so as to determine whether URPF needs to be implemented on the message.

The method for realizing URPF by means of traffic classification usually requires a large amount of complicated static configurations on the network device, such as an access control list (ACL) configuration. In addition, the network device needs to search for the above configuration information when forwarding a message. Therefore, the workload for maintaining the network device is increased, the process of forwarding the message by the network device is complicated, and the forwarding performance of the network device is also reduced.

Based on the above, the current methods all fail to realize URPF on messages simply and effectively, so that the forwarding performance of the network device is reduced.

### SUMMARY OF THE INVENTION

In an embodiment, the present invention is directed to a method and network device for realizing unicast reverse path forwarding, which simplifies the realizing process of implementing URPF on messages by the network device, so as to improve the forwarding performance of the network device.

In the method of realizing the unicast reverse path forwarding provided in the embodiment of the present invention, information about that a unicast reverse path forwarding (URPF) needs to be implemented is set in a route table item of a route table, and the method includes the following steps.

A message to be forwarded is received.

The route table item corresponding to the message is acquired.

After confirming that the acquired route table item contains the information about that URPF needs to be implemented, URPF is implemented on the message.

In an embodiment, the present invention also provides a network device, which includes a route table unit, a determination unit, and a URPF unit.

The route table unit is adapted to store a route table item containing information about that URPF needs to be implemented.

The determination unit is adapted to determine whether the route table item corresponding to a message contains the information about that URPF needs to be implemented during the process of forwarding the message by the network device, and trigger the URPF unit when confirming that the message contains the information about that URPF needs to be implemented.

The URPF unit is adapted to implement URPF on the message to be forwarded by the network device after being triggered by the determination unit.

It can be known from the technical solution provided in the aforementioned embodiment of the present invention, a URPF flag is set in the route table, so that the network device may directly implement URPF on the received data message according to the flag. It is unnecessary to implement URPF on all the messages forwarded from the interface, thus avoiding the process of searching traffic classification table items. In the embodiment of the present invention, the URPF flag in the network device's route table is set in static or dynamic manner, and so on, thereby realizing the purpose of implementing URPF on IP network easily and effectively and improving the forwarding performance of the network device.

### BRIEF DESCRIPTION OF THE DRAWINGS

The present invention will become more fully understood from the detailed description given herein below for illustration only, and thus are not limitative of the present invention, and wherein:

FIG. 1 is a schematic view of realizing URPF in the prior art;

FIG. 2 is an exemplary view of realizing URPF according to an embodiment;

FIG. 3 is a flowchart of dynamically generating a URPF flag according to an embodiment; and

FIG. 4 is a flowchart of implementing URPF according to the URPF flag in an embodiment.

### DETAILED DESCRIPTION OF THE EMBODIMENTS

In the embodiment of the present invention, URPF is realized by setting information about that URPF needs to be implemented, i.e., a URPF flag, in the route table item.

In the embodiment of the present invention, the URPF flag needs to be set for a route table item in a network device's route table, so that the network device may implement URPF on the message to be forwarded by the route table item carrying the URPF flag.

The URPF flag in the item of the network device's route table may be generated in static or dynamic manner. The static setting is, for example, statically adding the URPF flag into the relevant route table item, and the dynamic setting is, for example, dynamically generating the URPF flag by the network device according to the received routing information.

Hereinafter the technical solution provided in the embodiment of the present invention is illustrated assuming that the URPF flag is set in dynamic manner.

The local network device sets condition for additional information, generates a corresponding route table item according to routing information transmitted a peer network device, and sets the URPF flag in the route table item when confirming that the additional information in the routing information satisfies the condition for the additional information in URPF policy.

The local network device receives a message to be forwarded, and searches the route table. When finding that the searched route table item contains the URPF flag, the local network device implements URPF on the message to be forwarded, otherwise, the local network device forwards the message according to a normal process.

With reference to FIG. 2, the network structure in FIG. 2 is taken as an example hereinafter to illustrate the technical solution provided in the embodiment of the present invention.

In FIG. 2, a network device A is connected to a network device B, the network device B is connected to two network segments, i.e., the network device B is connected to a network segment R and a network segment F. It is set that the message transmitted to the network segment F needs the implementation of URPF, and the message transmitted to the network segment R does not need the implementation of URPF.

URPF policy is configured on the network device A to indicate that, if the additional information of the routing information satisfies the condition, a URPF flag needs to be set in the route table item generated by the network device A according to the routing information. For example, if the condition for the additional information in URPF policy is X equals Y, and if the additional information in the routing information is X equals Y, a URPF flag needs to be set in the route table item generated by the network device A according to the routing information. The condition may also be in other forms. The additional information may be one or more pieces of information in the routing information, and the condition may also be one or more. For example, in the embodiment of the present invention, when one piece of additional information satisfies one condition, the URPF flag is set for the corresponding route table item. When one piece of additional information satisfies multiple conditions, the URPF flag is set for the corresponding route table item. Or, when multiple pieces of additional information respectively satisfies the condition, the URPF flag is set for the corresponding route table item. In the embodiment of the present invention, the specific form of the condition of the additional information is not limited.
Since URPF needs to be implemented on the message transmitted to the network segment F by the network device A as shown in FIG. 2, the condition satisfied by the additional information is relevant to the network segment F, instead of the network segment R.

If URPF policy configured in the network device A is that the additional information in the routing information satisfies X equals Y, after the URPF policy is configured, when the network device A receives the routing information of the network segment F transmitted by the network device B, a corresponding route table item is generated for the routing information. Since the additional information in the routing information of the network segment F satisfies X equals Y, the URPF flag is set in the route table item generated by the network device A for the routing information of the network segment F. When the network device A receives the routing information of the network segment R transmitted by the network device B, a corresponding route table item is generated for the routing information. Since the additional information in the routing information of the network segment R satisfies X does not equal Y, the URPF flag fails to be set in the route table item generated by the network device A for the routing information of the network segment R. Herein, two different realizing processes of realizing not setting the URPF flag are illustrated. In the first process, no information on URPF is added in the route table item, i.e., the route table item generated by the network device A excludes "flag information about that URPF needs not to be implemented." In the second process, information about URPF is added in the route table item, i.e., the route table item generated by the network device A includes "flag information about that URPF needs to be implemented." For example, when 1 indicates that URPF needs to be implemented, 0 indicates that URPF needs not to be implemented, the network device A adds 0 into the route table item of the network segment R.

Since the URPF flag is set in the corresponding item of the route table of the network device A, the network device A may have the following process when intending to forward a message to the network segment F or the network segment R.

If other network segments intend to transmit a message to the network segment F, and the message needs to be forwarded through the network device A, the network device A receives the message to be forwarded to the network segment F, and searches the route table. When the network device A finds that the route table item contains a URPF flag, URPF is implemented on the message, and the message on which URPF is implemented is forwarded to the network device B.

If other network segments intend to transmit a message to the network segment R, and the message needs to be forwarded through the network device A, the network device A receives the message to be forwarded to the network segment F, and searches the route table. When the network device A finds that the route table item does not contain the URPF flag, URPF is not implemented on the message, and the message is forwarded according to the searched route table item as normal.

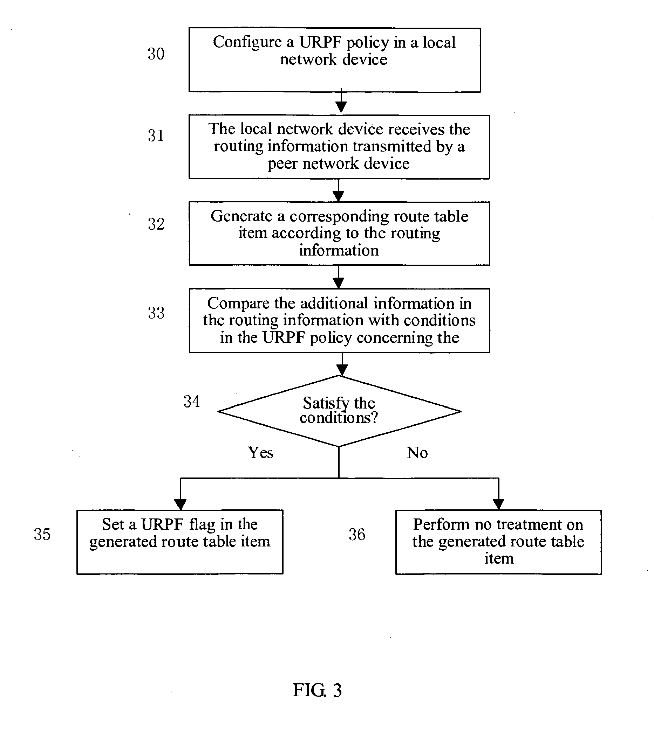

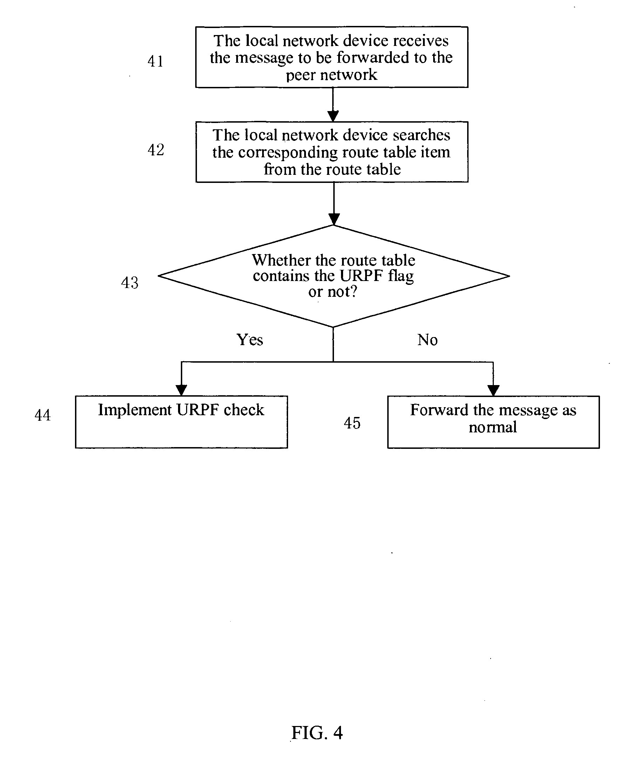

With reference to FIGs. 3 and 4, the method provided in the embodiment of the present invention is further illustrated.

In FIG. 3, the process of dynamically generating the URPF flag according to the embodiment of the present invention is described below.

In Step 30, the local network device configures a URPF policy. For example, the condition in the URPF policy configured in the local network device A is AS (autonomous system) numbed=100, and if the additional information in the routing information transmitted by the peer network device B satisfies the condition, the URPF flag is set in the route table item generated by the network device A.

In Step 31, the local network device receives the routing information transmitted by the peer network device.

In Step 32, the local network device generates the corresponding route table item according to the routing information.

In Step 33, the additional information in the routing information is compared with the condition in the URPF policy concerning the additional information.

In Step 34, whether the additional information in the routing information satisfies the condition in the URPF policy or not is determined, if yes, Step 35 is executed, otherwise, Step 36 is executed.

In Step 35, the network device A sets a URPF flag in the generated route table item.

In Step 36, the network device A does not set the URPF flag in the generated route table item.

In FIG. 3, the network device A receives the routing information transmitted by the network device B, the routing information includes the routing information transmitted to the network segment F and the routing information transmitted to the network segment R. The additional information in the routing information transmitted to the network segment F is set as AS number=100, and the additional information in the routing information transmitted to the network segment R is set as AS number=99. In this way the network device A compares the additional information in the routing information transmitted by the network device B with the preset condition, and finds that, if the additional information of the routing information transmitted to the network segment F satisfies the preset condition, the route table item of the corresponding network segment F is generated, and the URPF flag is set in the route table item, otherwise, the URPF flag is not set in the generated route table item of the corresponding network segment F.

The specific process of implementing URPF by the network device according to the URPF flag in the embodiment of the present invention is shown in FIG. 4.

Referring to FIG. 4, in Step 41, the local network device receives the message to be forwarded to the peer network device.

In Step 42, the local network device searches for the corresponding route table item from the route table.

In Step 43, if the local network device finds that the searched route table item contains the URPF flag, Step 44 is executed, otherwise, Step 45 is executed;

In Step 44, the local network device implements URPF on the message, and forwards the message according to the result of URPF.

In Step 45, the network device does not implement URPF on the message, and forwards the message as normal.

In FIG. 4, the local network device is set as the network device A. After the network device A receives the message forwarded to the network segment F by other network segments, the network device A searches for the route table item corresponding to the network segment F in the route table, and implements URPF on the massage forwarded to the network segment F if it is found that the route table item contains the URPF flag. If the network device A receives the message forwarded to the network segment R by other network segments, the network device A also searches for the route table item corresponding to the network segment R in the route table. If it is found that the found route table item does not contain the URPF flag, it indicates that URPF needs not to be implemented, and the message is directly forwarded to the network segment R.

The aforementioned embodiment is described in the example that the network device implements URPF on the message transmitted to a network segment. The technical solution in the embodiment of the present invention is also applicable when the network device needs to implement URPF on the messages transmitted to multiple network segments.

With reference to FIG. 2, the process of realizing URPF on the messages transmitted to multiple network segments by the network device is illustrated.

In FIG. 2, it is set that the network device B is further connected to a network segment S, the message transmitted to the network segment F needs the implementation of URPF, the message transmitted to the network segment S needs the implementation of URPF, and the message transmitted to the network segment R does not need the implementation of URPF. Meanwhile, a URPF policy in the network device A should be set respectively directed to the network segment F and the network segment S. When the network device A receives the routing information of the network segment F and the routing information of the network segment S transmitted by the network device, B, the corresponding route table items are generated for the routing information. Since the URPF policy is set directed to the network segment F and the network segment S, the additional information in the routing information of the network segment F satisfies the condition in the URPF policy on the network segment F, and the additional information in the routing information of the network segment S satisfies the condition in the URPF policy on the network segment S. Therefore, the network device A sets the URPF flag in the route table item generated by the routing information of the network segment F, and sets the URPF flag in the route table item generated by the routing information of the network segment S. In this way, the network device A may implement URPF on the messages transmitted to the network segment F and the network segment S by means of the URPF flag in the route table item. The specific solution is substantially the same as the aforementioned embodiment, and thus is not repeated here.

The embodiment of the present invention may make an improvement on the aforementioned embodiment, that is, the embodiment of the present invention may also set at least one interface in the local network device as an interface where URPF needs to be implemented on the message, and save the interface information in the local network device's route table, in which the interface information in the route table may also be referred to as an interface list.

After the local network device finds that the searched route table item contains the URPF flag, whether the interface corresponding to the message belongs to the interface in the interface list or not needs to be further determined. If yes, URPF is implemented on the message to be forwarded, otherwise, the message is forwarded according to the normal process.

More specifically, when a URPF policy is configured, at least one interface on the network device A may also be designated as the interface where URPF needs to be implemented. Any one of the interfaces may be a physical interface such as a physical ingress and a physical egress, or a logic interface such as a logic ingress and a logic egress. The embodiment of the present invention may save the interface information in the route table of the network device. The interface may match with the ingress of the message, or an egress of the message, or the ingress and the egress of the message at the same time.

Therefore, after the local network device finds a URPF flag in the route table, whether the ingress and/or egress of the message is in the interface list or not is further determined. If yes, URPF is implemented, and the message is forwarded according to URPF result, otherwise, URPF is not implemented, and the message is forwarded according to the normal process.

The network device provided in the embodiment of the present invention includes a route table unit, a URPF flag setting unit, a URPF unit, and a determination unit.

The route table unit is mainly adapted to store the route table item, in which the corresponding route table item contains a URPF flag. The route table item stored in the route table unit may be configured in a static manner, or generated in a dynamic manner according to the routing information received by the network device. The URPF flag in the route table item may be configured by the URPF flag setting unit in a static manner, or generated in a dynamic manner by the URPF flag setting unit according to the routing information received by the network device.

The URPF flag setting unit is mainly adapted to set a URPF flag in the generated route table item when the additional information of the routing information satisfies the condition in the URPF policy concerning additional information, in the process of generating the corresponding route table item by the network device according to the routing information transmitted from the peer network device. When the additional information in the routing information can not satisfy the condition in the URPF policy concerning additional information, the URPF flag setting unit may not set the URPF flag in the route table item. The additional information, the URPF policy, the condition concerning the additional information, and two specific process of realizing not setting the URPF flag for the route table item are identical to those described in the aforementioned process embodiment.

The determination unit is mainly adapted to forward messages at the network device, and trigger a URPF unit when determining that the route table item in the route table unit corresponding to the message contains a URPF flag, so that the URPF unit implements URPF on the forwarded message. The determination unit does not trigger the URPF unit when determining that the route table item in the route table unit corresponding to the message to be forwarded by the network device does not contain the URPF flag, the network device forwards the message according to the normal process.

The URPF unit is mainly adapted to implement URPF on the message to be forwarded by the network device after being triggered by the determination unit.

In addition, the route table item stored in the route table unit disclosed in the embodiment of the present invention further includes an interface list where URPF needs to be implemented. Meanwhile, the determination unit triggers the URPF unit when finding that the searched route table item contains the URPF flag, and the interface corresponding to the message is contained in the interface information list where URPF needs to be implemented.

It can be known from the description in the aforementioned embodiment that, the embodiment of the present invention sets a URPF flag for the relevant table item in the route table, so that it is not necessary to implement URPF on all the messages to be forwarded through the interface, thus avoiding the process of searching traffic classification table item, simplifying the process of realizing URPF, improving the forwarding performance of the network device, and overcoming the problems in the prior art.

Though the present invention has been disclosed above by the preferred embodiments, they are not intended to limit the present invention. Anybody skilled in the art can make some modifications and variations without departing from the scope of the present invention. Therefore, the protecting range of the present invention falls in the appended claims and their equivalents.

## Claims

1. A method for realizing unicast reverse path forwarding, URPF, **characterized by**, information about that URPF needs to be implemented is set in a route table item of a route table, the method comprising:
receiving a message to be forwarded (41);
acquiring a route table item corresponding to the message (42);
implementing URPF on the message (44) after determining that the acquired route table item contains the information about that URPF needs to be implemented (43).

2. The method according to claim 1, **characterized in** the information about that URPF needs to be implemented in the route table item is set in a static manner and/or a dynamic manner.

3. The method according to claim 2, **characterized in** the dynamic manner comprises:
generating, by a local network device, a corresponding route table item according to routing information transmitted by a peer network device, and setting the information about that URPF needs to be implemented in the route table item when determining that additional information in the routing information satisfies a condition in a URPF policy concerning the additional information.

4. The method according to claim 1, 2, or 3, **characterized in**, further comprising:
setting interface information about that URPF needs to be implemented, and wherein the implementing URPF on the message after determining that the acquired route table item contains the information about that URPF needs to be implemented comprises:
implementing URPF on the message to be forwarded when confirming that the acquired route table item contains the information about that URPF needs to be implemented, and the interface corresponding to the message belongs to an interface where URPF needs to be implemented.

5. The method according to claim 4, **characterized in** the interface information about that URPF needs to be implemented is saved in the route table item of the network device's route table.

6. The method according to claim 4, **characterized in** any one interface in the set interface information about that URPF needs to be implemented is a logic interface or a physical interface.

7. The method according to claim 4, **characterized in** the interface corresponding to the message is an ingress of the message and/or an egress of the message.

8. A network device, **characterized by** comprising:
a route table unit, adapted to store a route table item containing information about that unicast reverse path forwarding, URPF, needs to be implemented;
a determination unit, adapted to determine whether the route table item corresponding to a message contains the information about that URPF needs to be implemented during a process of forwarding the message by the network device, and trigger a URPF unit when determining that the message contains the information about that URPF needs to be implemented;
a URPF unit, adapted to implement URPF on the message to be forwarded by the network device after being triggered by the determination unit.

9. The network device according to claim 8, **characterized in**, further comprising:
a URPF flag setting unit, adapted to set the information about that URPF needs to be implemented in the generated route table item, when confirming that additional information in the routing information satisfies the condition in the URPF policy concerning the additional information, during the process of generating the corresponding route table item by the network device according to the received routing information,.

10. The network device according to claim 8 or 9, **characterized in**, the route table item stored in the route table unit further comprises interface list information about that URPF needs to be implemented;
after the determination unit finds that the searched route table item contains the information about that URPF needs to be implemented, and the interface corresponding to the message belongs to the interface information list about that URPF needs to be implemented, the URPF unit is triggered.

## Patentansprüche

1. Verfahren zum Realisieren des Unicast Reverse Path Forwarding URPF, **dadurch gekennzeichnet, dass** Informationen, um die herum URPF implementiert werden muss, in einem Routentabellenposten einer Routentabelle eingerichtet werden, wobei das Verfahren die folgenden Schritte umfasst:
Empfangen einer weiterzuleitenden Nachricht (41);
Beschaffen eines der Nachricht entsprechenden Routentabellenpostens (42);
Implementieren von URPF an der Nachricht (44), nachdem bestimmt wird, dass der beschaffte Routentabellenposten die Informationen enthält, um die herum URPF implementiert werden muss (43).

2. Verfahren nach Anspruch 1, **dadurch gekennzeichnet, dass** die Informationen, um die herum URPF in dem Routentabellenposten implementiert werden muss, auf statische Weise und/oder dynamische Weise eingerichtet werden.

3. Verfahren nach Anspruch 2, **dadurch gekennzeichnet, dass** die dynamische Weise Folgendes umfasst:
Erzeugen eines entsprechenden Routentabellenpostens durch eine lokale Netzwerkeinrichtung gemäß durch eine Peer-Netzwerkeinrichtung übertragenen Routinginformationen und Einrichten der Informationen, um die herum URPF implementiert werden muss, in dem Routentabellenposten, wenn bestimmt wird, dass zusätzliche Informationen in den Routinginformationen eine Bedingung in einer URPF-Richtlinie betreffend die zusätzlichen Informationen erfüllen.

4. Verfahren nach Anspruch 1, 2 oder 3, **dadurch gekennzeichnet, dass** es ferner Folgendes umfasst:
Einrichten von Schnittstelleninformationen, um die herum URPF implementiert werden muss, und wobei das Implementieren von URPF an der Nachricht nach dem Bestimmen, dass der beschaffte Routentabellenposten die Informationen enthält, um die herum URPF implementiert werden muss, Folgendes umfasst:
Implementieren von URPF an der weiterzuleitenden Nachricht, wenn bestätigt wird, dass der beschaffte Routentabellenposten die Informationen enthält, um die herum URPF implementiert werden muss, und die der Nachricht entsprechende Schnittstelle zu einer Schnittstelle gehört, bei der URPF implementiert werden muss.

5. Verfahren nach Anspruch 4, **dadurch gekennzeichnet, dass** die Schnittstelleninformationen, um die herum URPF implementiert werden muss, in dem Routentabellenposten der Routentabelle der Netzwerkeinrichtung abgespeichert werden.

6. Verfahren nach Anspruch 4, **dadurch gekennzeichnet, dass** eine beliebige Schnittstelle in den eingerichteten Schnittstelleninformationen, um die herum URPF implementiert werden muss, eine logische Schnittstelle oder eine physische Schnittstelle ist.

7. Verfahren nach Anspruch 4, **dadurch gekennzeichnet, dass** die der Nachricht entsprechende Schnittstelle ein Eingang der Nachricht und/oder ein Ausgang der Nachricht ist.

8. Netzwerkeinrichtung, **dadurch gekennzeichnet, dass** sie Folgendes umfasst:
eine Routentabelleneinheit, die dafür ausgelegt ist, einen Routentabellenposten zu speichern, der Informationen enthält, um die herum Unicast Reverse Path Forwarding URPF implementiert werden muss;
eine Bestimmungseinheit, die dafür ausgelegt ist zu bestimmen, ob der einer Nachricht entsprechende Routentabellenposten während eines Prozesses des Weiterleitens der Nachricht durch die Netzwerkeinrichtung die Informationen enthält, um die herum URPF implementiert werden muss, und eine URPF-Einheit zu triggern, wenn bestimmt wird, dass die Nachricht die Informationen enthält, um die herum URPF implementiert werden muss;
eine URPF-Einheit, die dafür ausgelegt ist, an der durch die Netzwerkeinrichtung weiterzuleitende Nachricht URPF zu implementieren, nachdem sie durch die Bestimmungseinheit getriggert wird.

9. Netzwerkeinrichtung nach Anspruch 8, **dadurch gekennzeichnet, dass** sie ferner Folgendes umfasst:
eine URPF-Flag-Setzeinheit, die dafür ausgelegt ist, während des Prozesses des Erzeugens des entsprechenden Routentabellenpostens durch die Netzwerkeinrichtung gemäß den empfangenen Routinginformationen die Informationen, um die herum URPF implementiert werden muss, in dem erzeugten Routentabellenposten einzurichten, wenn bestätigt wird, dass zusätzliche Informationen in den Routinginformationen die Bedingung in der URPF-Richtlinie betreffend die zusätzlichen Informationen erfüllen.

10. Netzwerkeinrichtung nach Anspruch 8 oder 9, **dadurch gekennzeichnet, dass** der in der Routentabelleneinheit gespeicherte Routentabellenposten ferner Schnittstellenlisteninformationen umfasst, um die herum URPF implementiert werden muss;
und, nachdem die Bestimmungseinheit findet, dass der durchsuchte Routentabellenposten die Informationen enthält, um die herum URPF implementiert werden muss, und die der Nachricht entsprechende Schnittstelle zu der Schnittstelleninformationsliste gehört, um die herum URPF implementiert werden muss, die URPF-Einheit getriggert wird.

## Revendications

1. Procédé permettant de réaliser un transfert de trajet inverse de diffusion individuelle, URPF, **caractérisé en ce que** des informations sur le fait que ce transfert URPF doit être mis en oeuvre sont établies dans un élément de table de routage appartenant à une table de routage, le procédé comprenant :
la réception d'un message devant être transféré (41),
l'acquisition d'un élément de table de routage correspondant au message (40),
la mise en oeuvre du transfert URPF sur le message (44) après une détermination que l'élément acquis de table de routage contient les informations sur le fait que ce transfert URPF doit être mis en oeuvre (43).

2. Procédé selon la revendication 1, **caractérisé en ce que** les informations sur le fait que ce transfert URPF doit être mis en oeuvre, dans l'élément de table de routage, sont établies de manière statique et/ou de manière dynamique.

3. Procédé selon la revendication 2, **caractérisé en ce que** la manière dynamique comprend :
la génération, grâce à un réseau local, d'un élément correspondant de table de routage en fonction des informations de routage transmises par un réseau pair, ainsi que l'établissement, dans l'élément de table de routage, des informations sur le fait que ce transfert URPF doit être mis en oeuvre lors de la détermination que des informations complémentaires dans les informations de routage satisfont une condition dans une politique de transfert URPF concernant les informations complémentaires.

4. Procédé selon la revendication 1, 2 ou 3, **caractérisé en ce qu'**il comprend en outre :
l'établissement d'informations d'interfaces sur le fait que ce transfert URPF doit être mis en oeuvre, et dans lequel la mise en oeuvre du transfert URPF sur le message, après la détermination que l'élément acquis de table de routage contient les informations sur le fait que ce transfert URPF doit être mis en oeuvre, comprend :
la mise en oeuvre du transfert URPF sur le message devant être transféré lors de la confirmation que l'élément acquis de table de routage contient les informations sur le fait que ce transfert URPF doit être mis en oeuvre, et l'interface correspondant au message appartient à une interface où le transfert URPF doit être mis en oeuvre.

5. Procédé selon la revendication 4, **caractérisé en ce que** les informations d'interfaces sur le fait que ce transfert URPF doit être mis en oeuvre sont sauvegardées dans l'élément de table de routage appartenant à la table de routage du réseau.

6. Procédé selon la revendication 4, **caractérisé en ce qu'**une quelconque interface dans les informations d'interfaces établies sur le fait que ce transfert URPF doit être mis en oeuvre est une interface logique ou une interface physique.

7. Procédé selon la revendication 4, **caractérisé en ce que** l'interface correspondant au message représente une entrée et/ou une sortie du message.

8. Réseau, **caractérisé en ce qu'**il comprend :
une unité de table de routage, conçue pour mémoriser un élément de table de routage contenant des informations sur le fait que ce transfert de trajet inverse de diffusion individuelle, URPF, doit être mis en oeuvre,
une unité de détermination, conçue pour déterminer si l'élément de table de routage, correspondant à un message, contient les informations sur le fait que ce transfert URPF doit être mis en oeuvre pendant un traitement de transfert du message par le réseau, ainsi que pour déclencher une unité de transfert URPF lors de la détermination que le message contient des informations sur le fait que ce transfert URPF doit être mis en oeuvre,
une unité de transfert URPF, conçue pour mettre en oeuvre le transfert URPF sur le message devant être transféré par le réseau après avoir été déclenchée par l'unité de détermination.

9. Réseau selon la revendication 8, **caractérisé en ce qu'**il comprend en outre :
une unité de positionnement de drapeau de transfert URPF, conçue pour établir les informations sur le fait que ce transfert URPF doit être mis en oeuvre dans l'élément généré de table de routage lors de la confirmation du fait que des informations complémentaires dans les informations de routage satisfont la condition dans la politique de transfert URPF concernant les informations complémentaires, pendant le traitement de génération de l'élément correspondant de table de routage par le réseau en fonction des informations de routage reçues.

10. Réseau selon la revendication 8 ou 9, **caractérisé en ce que** l'élément de table de routage, mémorisé dans l'unité de table de routage, comprend en outre des informations d'une liste d'interfaces sur le fait que ce transfert URPF doit être mis en oeuvre,
l'unité de transfert URPF est déclenchée après que l'unité de détermination a trouvé que l'élément recherché de table de routage contient les informations sur le fait que ce transfert URPF doit être mis en oeuvre, et que l'interface correspondant au message appartient à la liste d'informations d'interfaces sur le fait que ce transfert URPF doit être mis en oeuvre.
